# EUROPEAN PATENT SPECIFICATION

(11) **EP 2 546 081 B1**
(45) Date of publication and mention of the grant of the patent: **30.03.2016**
(21) Application number: 11189509.0
(22) Date of filing: 17.11.2011
(51) Int. Cl.: B60C 13/02

(54) **A vehicle tire having a sidewall section with a plurality of curved protrusions**
Fahrzeugreifen mit einem Seitenwandabschnitt mit mehreren kurvenförmigen Erhebungen
Pneu de véhicule doté d'une section de paroi latérale avec une pluralité de protubérances recourbées

(30) Priority: 13.07.2011 KR 20110069384
(43) Date of publication of application: 16.01.2013
(73) Proprietor: Hankook Tire Co., Ltd., Gangnam-gu, Seoul 135-723 (KR)
(72) Inventor: Ahn, Jae Sung, Seoul 135-723 (KR); Choi, Yoon Jin, Seoul 135-723 (KR)
(74) Representative: Atkinson, Jonathan David Mark

(56) References cited:
- EP-A1- 1 925 468
- EP-A1- 2 233 322
- WO-A1-2009/017167
- JP-A- 8 197 917
- JP-A- 2000 016 030
- JP-A- 2001 039 129
- JP-A- 2001 206 024
- JP-A- 2007 176 304
- JP-A- 2008 056 176
- US-A1- 2006 254 689
- US-A1- 2011 036 475
- US-S1- D 475 345

## Description

### BACKGROUND OF THE INVENTION

### 1. Field of the Invention

The present invention relates to a vehicle tire having a sidewall section with a plurality of curved protrusions, and more particularly to a vehicle tire, which may increase fuel efficiency by improving aerodynamic performance and lowering rotation resistance of the tire, and may enhance safety by allowing stable contact between the tire and a road surface when drive at high speeds.

### 2. Description of the Related Art

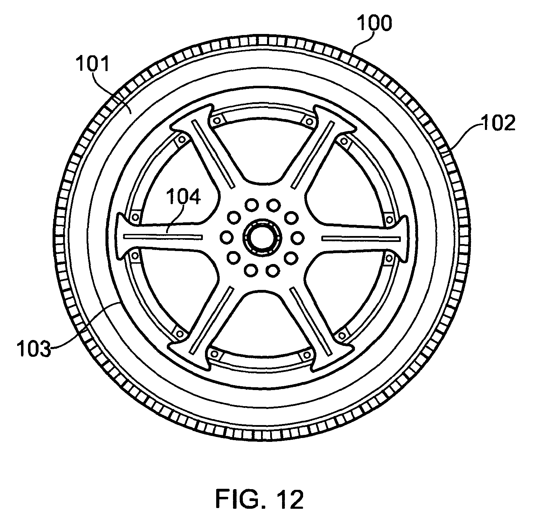

Referring to Fig. 12, a vehicle tire includes a tread section 100 to be brought into contact with a road, a sidewall section 101 flexibly extending and contracting at opposite sides of the tire, a shoulder section 102 extending from an edge of the tread section 100 to an upper portion of the sidewall section 101, and a bead section 103 to be mounted on a wheel 104.

The sidewall section 101 is a part on which tire marking items and the like are carved. That is, words containing a variety of information such as a trade name, a brand name, weight, tire pressure, warning, certification items, etc. are engraved on the sidewall section 101. Further, the sidewall section 101 serves as a spring for transferring force between the tread section 100 contacting the road and the wheel 104 and for supporting load through extension and contraction.

With recent emphasis on environmentally friendly performance and fuel efficiency issues of vehicles, various attempts have been made to improve the sidewall section of a tire in terms of performance and fuel efficiency. For example, Japanese Patent Laid-open Publications No. 1996-318717 and No. 2001-191745 disclose sidewall section structures where serration type ridges are successively formed to hide an undulating pattern on the sidewall section of the tire in order to decrease defects on an outer appearance of the tire.

Further, an attempt has been made to reduce air resistance by engraving dimples in the sidewall section of the tire to generate turbulence while running. JP8197917 discloses a pneumatic tire according to the preamble of claim 1 for protecting against the occurrence of cracks and the growth of cracks in the tire.

### SUMMARY OF THE INVENTION

The present invention is directed to solving the problems of the related art, and an object of the present invention is to provide a vehicle tire, in which a curved protrusion having a ridge structure is embossed above a side mold base (a flat reference plane: this means a basic plane of embossment and engraving when words containing a variety of information embossed and engraved on a sidewall section. In the present invention, this term will be used for explaining a protrusion type) of the sidewall section, thereby improving aerodynamic performance and enhancing safety.

In accordance with a first aspect, there is disclosed vehicle tire according to claim 1. In an example, the vehicle tire has a sidewall section arranged between a shoulder section connected to an edge of a tread section and a bead section to be mounted on a wheel, wherein a plurality of ridge-type curved protrusions embossed above a side mold base of the sidewall section is successively formed and extended in the clockwise direction along by the sidewall section from a start point placed at one side and starting at an upper rim flange of the bead section to a end point placed at the other side on a parting bottom line placed at a top of the sidewall section, and the ridge-type curved protrusions are successively and repeatedly formed in the same equiangular structure on the side mold base of the sidewall section.

### BRIEF DESCRIPTION OF THE DRAWINGS

The above and other aspects, features and advantages of the present invention will be more clearly understood from the following detailed description taken in conjunction with the accompanying drawings:
Fig. 1 is a photograph partially showing a vehicle tire according to one exemplary embodiment of the present invention;
Fig. 2 is an enlarged cross-sectional view taken along line I-I of Fig. 1;
Fig. 3 is a view illustrating air flow due to curved protrusions on the sidewall section of the tire according to the exemplary embodiment of the present invention;
Fig. 4 is a view illustrating down force effect under wheel housing in the sidewall section of the tire according to the exemplary embodiment.
Figs. 5 to 11 are photographs of tire sidewall sections according to other exemplary embodiments of the present invention; and
Fig. 12 is a photograph of a conventional tire mounted on a general wheel.

### DESCRIPTION OF THE EMBODIMENTS

Exemplary embodiments of the present invention will now be described in detail with reference to the accompanying drawings.

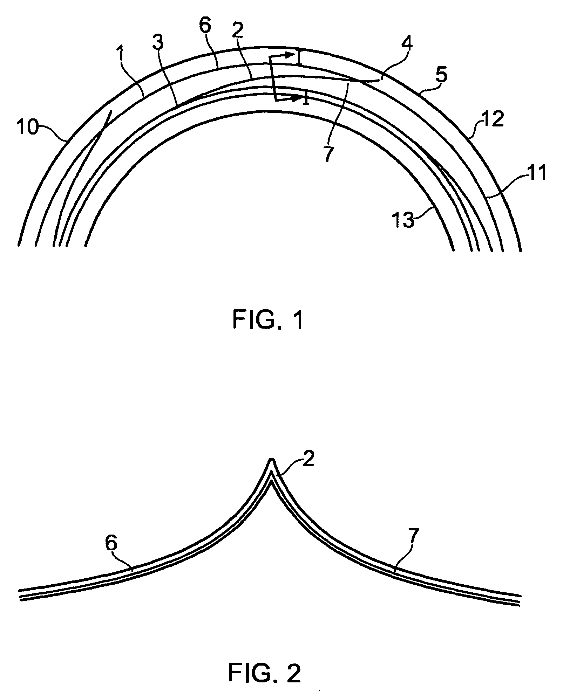

Referring to the exemplary embodiments shown in Fig. 1, a vehicle tire having a sidewall section arranged between a shoulder section 12 connected to an edge of a tread section 10 and a bead section 13 to be mounted on a wheel, in which a plurality of ridge-type curved protrusion 2 embossed above a side mold base 1 of the sidewall section 11 is successively formed and extended in the clockwise direction along by the sidewall section from a start point 3 placed at one side and starting at an upper rim flange of the bead section 13 to a end point 4 placed at the other side on a parting bottom line 5 placed at a top of the sidewall section 101, and the ridge-type curved protrusions 2 are successively and repeatedly formed in the same equiangular structure on the side mold base 1 of the sidewall section 11.

As illustrated in Fig. 2, the ridge-type curved protrusion 2 include an upper side 6 and a lower side 7 gently curved and extending from the ridge to the side mold base 1 of the sidewall section 11 respectively and the ridge-type curved protrusion 2 has a cross-sectional shape of a bisymmetrical protrusion curve.

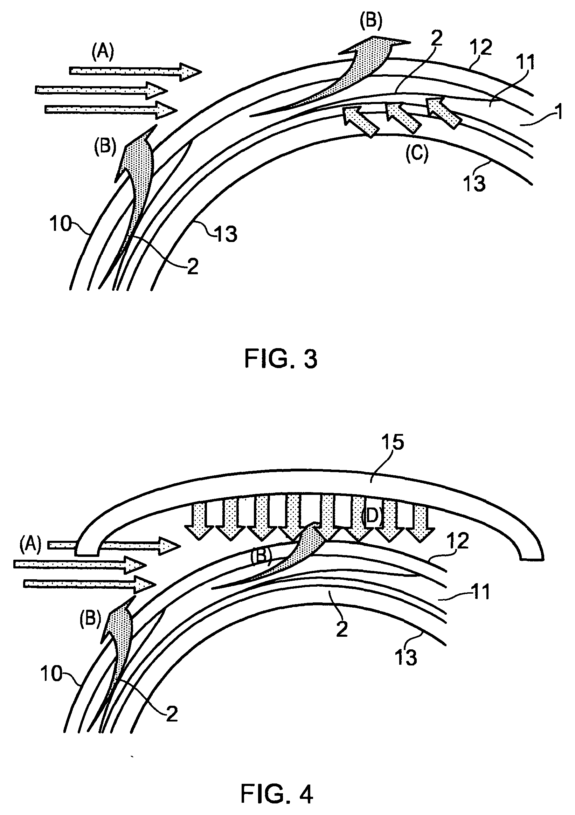

With this structure, the ridge-type curved protrusion 2 of the sidewall section 11 has a cross-sectional shape of a bisymmetrical protrusion curve, as shown in Fig. 2, and thus may change airflow moving along the sidewall section 11 of the tire. As shown in Fig. 3, airflow A entering the sidewall section 11 is changed into airflow B different in direction from the airflow A while passing through the ridge-type curved protrusion 2, and on the bottom of the ridge-type curved protrusion 2, slow airflow C is generated to allow only small amounts of air to flow, thereby lowering air pressure applied to the whole sidewall section 11. Further, the bottom of the ridge-type curved protrusion 2 has high pressure due to the slow airflow and generates lateral force that is advantageous to rotate the tire, thereby increasing fuel efficiency.

Further, the airflow A entering the sidewall section 11 as shown in Fig. 4 does not naturally pass the sidewall section 11 and moves inside a wheel housing 15, thereby generating down force D pressing the top of the tread section 10. The down force D causes stable contact between the tire and a road during driving at high speeds and thus enhances safety. This is the same principle as the effect that a rear spoiler of a vehicle generates a down force when travelling at high speed, thereby forcing the rear of the vehicle downwards.

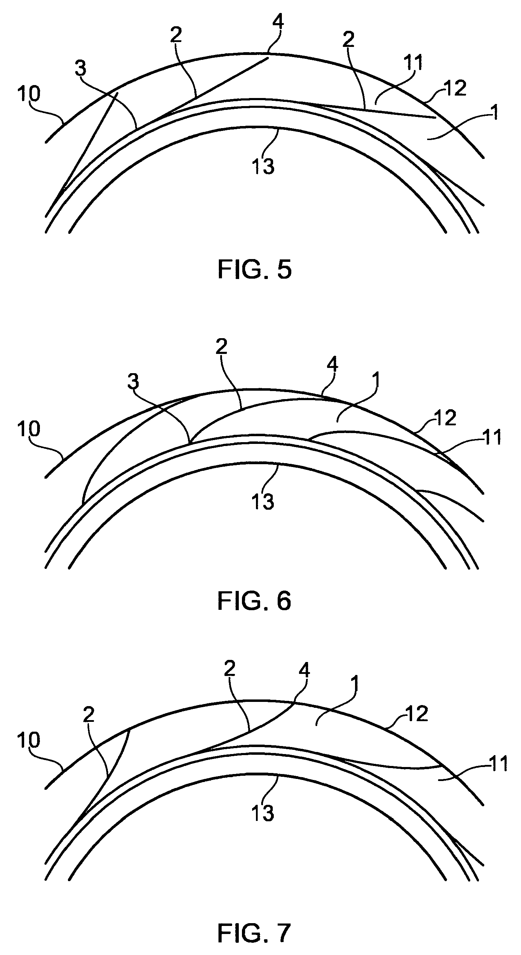

Meanwhile, Figs. 5 to 11 are photographs of tire sidewall sections according to other exemplary embodiments. In an exemplary embodiment shown in Fig. 5, the start point 3 and the end point 4 of the ridge-type curved protrusion 2 are connected by a straight line. In an exemplary embodiment shown in Fig. 6, the start point 3 and the end point 4 of the ridge-type curved protrusion 2 are connected via a curved line having a smaller radius than that of Fig. 1. In an exemplary embodiment shown in Fig. 7, the ridge-type curved protrusions 2 are curved in the counterclockwise direction, as opposed to that of Fig. 1.

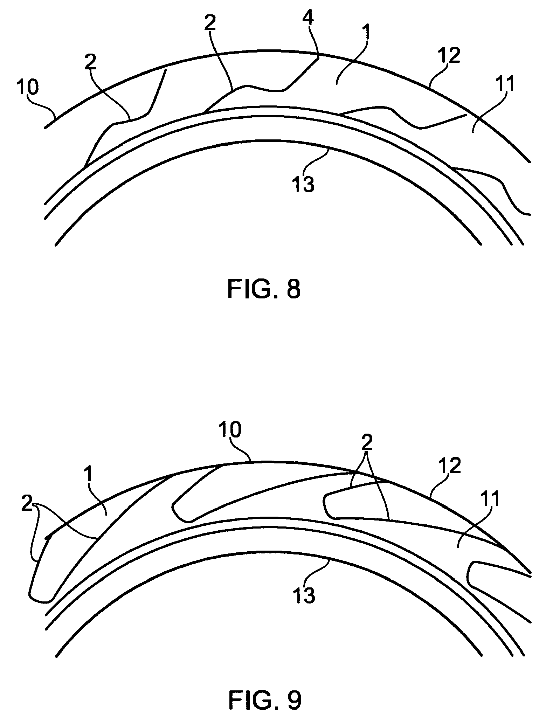

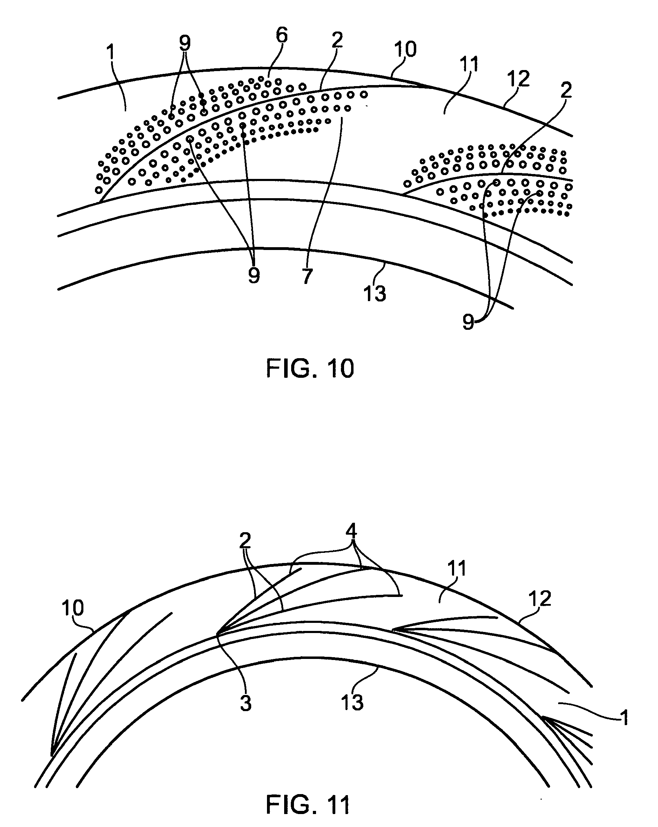

Further, in an exemplary embodiment shown in Fig. 8, the start point 3 and the end point 4 of the ridge-type curved protrusion 2 are connected in a zigzag shape. In an exemplary embodiment shown in Fig. 9, the ridge-type curved protrusion 2 is formed with two curved lines. The exemplary embodiment of Fig. 10 shows that dimples 9 are formed and arranged on the top and bottom of the ridge-type curved protrusion 2. In this case, the dimples 9 may have various shapes, such as a circle, a triangle and a polygon, the sizes of which may be the same or different.

In an exemplary embodiment of Fig. 11, the ridge-type curved protrusions 2 have different end points 4 branched from one start point 3.

As described above, in the sidewall sections for vehicles tire according to the exemplary embodiments of the present invention, a ridge-type curved protrusion is configured to improve aerodynamic performance while enhancing safety by enabling stable contact between the tire and the road at high speeds.

It should be understood that the embodiments and the accompanying drawings have been described for illustrative purposes, and the present invention is limited only by the following claims. Further, those skilled in the art will appreciate that various modifications, additions and substitutions are possible without departing from the scope of the invention according to the accompanying claims.

## Claims

1. A vehicle tire having a sidewall section (11) arranged between a shoulder section (12) connected to an edge of a tread section (10) and a bead section (13) to be mounted on a wheel comprising:
a plurality of ridge-type curved protrusions (2) embossed above a side mold base (1) of the sidewall section (11) and successively formed and extended in the clockwise direction along by the sidewall section from a start point (3) at an upper rim flange of the bead section (13) to an end point (4) at a top of the sidewall section (101), the ridge-type curved protrusions (2) being successively and repeatedly formed in the same equiangular structure on the side mold (1) base of the sidewall section (11); wherein
the ridge-type curved protrusions (2) have a cross-sectional shape of a symmetrical protrusion curve;
**characterized in that** the ridge-type curved protrusions (2) comprise a radially upper side (6) and a radially lower side (7) gently concavely curved and extending from the ridge to the side mold base (1) of the sidewall section (11) respectively.

2. The vehicle tire according to claim 1, wherein dimples (9) are formed and arranged on a top and a bottom portion of the ridge-type curved protrusion (2).

3. The vehicle tire according to claim 2, wherein the dimples (9) have a shape selected from: a circle, a triangle and a polygon; and wherein the sizes of the dimples (9) are the same or different.

4. The vehicle tire according to claim 3, wherein the sizes of the dimples (9) are different.

5. The vehicle tire according to claim 1, wherein the ridge-type curved protrusions (2) have different end points (4) branched from one start point (3).

## Patentansprüche

1. Fahrzeugreifen mit einem zwischen einem mit einer Kante eines Laufprofilabschnittes (10) verbundenen Schulterabschnitt (12) und einem Wulstabschnitt (13) angeordneten Seitenwandabschnitt (11) zum Aufsetzen auf ein Rad, umfassend:
eine Mehrzahl an über einer seitlichen Formbasis (1) des Seitenwandabschnittes (11) geprägten und nacheinander von einem Startpunkt (3) an einem oberen Felgenflansch des Wulstabschnittes (13) zu einem Endpunkt (4) an einer Oberseite des Seitenwandabschnittes (101) im Uhrzeigersinn entlang des Seitenwandabschnitts geformten und geweiteten rippenartigen gekrümmten Vorsprüngen (2), wobei die rippenartigen gekrümmten Vorsprünge (2) nacheinander und wiederholt auf der seitlichen Formbasis (1) des Seitenwandabschnittes (11) in derselben gleichwinkligen Struktur geformt werden; wobei
die rippenartigen gekrümmten Vorsprünge (2) eine Querschnittsform einer symmetrischen Vorsprungskrümmung haben;
**dadurch gekennzeichnet, dass** die rippenartigen gekrümmten Vorsprünge (2) eine radial obere Seite (6) und eine radial untere Seite (7) umfassen, die leicht konkav gekrümmt sind und sich jeweils von den Rippen zu der seitlichen Formbasis (1) des Seitenwandabschnitts (11) erstrecken.

2. Fahrzeugreifen nach Anspruch 1, wobei Noppen (9) geformt und auf einem oberen und einem unteren Abschnitt des rippenartigen gekrümmten Vorsprungs (2) angeordnet werden.

3. Fahrzeugreifen nach Anspruch 2, wobei die Noppen (9) eine Form aufweisen, die ausgewählt ist aus: einem Kreis, einem Dreieck und einem Vieleck; und wobei die Größen der Noppen (9) gleich oder unterschiedlich sind.

4. Fahrzeugreifen nach Anspruch 3, wobei die Größen der Noppen (9) unterschiedlich sind.

5. Fahrzeugreifen nach Anspruch 1, wobei die rippenartig gekrümmten Vorsprünge (2) verschiedene von einem Startpunkt (3) abzweigende Endpunkte (4) aufweisen.

## Revendications

1. Un pneu de véhicule, possédant une section de flanc (11) disposée entre une section d'épaulement (12) raccordée à un bord d'une bande de roulement (10) et une section de tringle (13), devant être monté sur une roue, comprenant :
une pluralité de saillies courbes du type à crête (2) estampées au-dessus d'une base à moule latérale (1) de la section de flanc (11), et formées et étendues successivement dans le sens horaire le long de la section de flanc depuis un point de départ (3) à une bride de bord supérieur de la section de tringle (13) jusqu'à un point de fin (4) sur une partie supérieure de la section de flanc(101), les saillies courbes du type à crête (2) étant formées successivement et de façon répétée dans la même structure équiangle sur la base à moule latérale (1) de la section de flanc (11) ; dans laquelle
les saillies courbes du type à crête (2) présentent une forme transversale d'une courbe de saillie symétrique ;
**caractérisé en ce que** les saillies courbes du type à crête (2) comprennent un côté radialement supérieur (6) et un côté radialement inférieur (7) à courbe concave douce, et s'étendent de la crête à la base à moule latérale (1) de section de flanc (11) respectivement.

2. Le pneu de véhicule selon la revendication 1, des creux (9) étant formés et disposés sur une partie supérieure et inférieure de la saillie courbe du type à crête (2).

3. Le pneu de véhicule selon la revendication 2, les creux (9) ayant une forme sélectionnée parmi les suivantes : un cercle, un triangle, et un polygone ; et la taille des creux (9) étant la même ou différente.

4. Le pneu de véhicule selon la revendication 3, la taille des creux (9) étant différente.

5. Le pneu de véhicule selon la revendication 1, les saillies courbes du type à crête (2) possédant des points d'extrémité (4) différents ramifiés depuis un point de départ (3).
